# EUROPÄISCHE PATENTSCHRIFT

(11) **EP 1 462 346 B1**
(45) Veröffentlichungstag und Bekanntmachung des Hinweises auf die Patenterteilung: **13.08.2008**
(21) Anmeldenummer: 04005891.9
(22) Anmeldetag: 12.03.2004
(51) Int. Cl.: B62D 33/02, B60P 3/41, B61D 3/08

(54) **Rungensystem und Eisenbahnwagen mit einem Rungensystem**
Stanchion system for a railway vehicle.
Système de ranchers pour véhicule ferroviaire.

(30) Priorität: 24.03.2003 AT 4682003
(43) Veröffentlichungstag der Anmeldung: 29.09.2004
(73) Patentinhaber: Wanek-Pusset, Peter, 6805 Karpfenberg (AT); Grentner, Bernhard, 8614 Breitenau (AT)
(72) Erfinder: Wanek-Pusset, Peter, 6805 Karpfenberg (AT); Grentner, Bernhard, 8614 Breitenau (AT)
(74) Vertreter: Vinazzer, Edith

(56) Entgegenhaltungen:
- GB-A- 1 457 992
- US-A- 2 164 586
- US-A- 4 966 085
- US-A1- 2002 009 345

## Beschreibung

Die Erfindung betrifft ein Rungensystem für Eisenbahnwagen oder Lastkraftwagen mit zumindest einer über einen Bolzen drehbar gelagerten Runge, welche in eine aufrechte Betriebsstellung und eine geklappte Ruhestellung bringbar und in der Betriebsstellung fixierbar ist.

Rungensysteme sind Transportsicherungen für den Transport von Holz und anderen Gütern. Bekannt sind feststehende Rungen, die beispielsweise auf der Wagenplattform anschraubt oder angeschweißt werden, ferner steckbare Rungen, die in am Fahrzeug angeordnete Bügel eingesteckt und bei Bedarf durch Herausziehen wieder entfernt werden können. Fixe Rungen lassen sich vom Fahrzeug nur durch einen hohen Aufwand entfernen und machen das Fahrzeug sehr unflexibel im Einsatz. Das Hantieren mit Steckrungen ist auf Grund des nicht unerheblichen Gewichtes der Rungen mühsam, gestattet zwar die Verwendung des Fahrzeuges für andere Einsatzzwecke, beispielsweise zum Containertransport, ist aber, da die Rungen bei Nichtbenützung gesondert verstaut werden müssen, wenig flexibel.

Bekannt sind auch Rungensysteme mit drehbar angeordneten Rungen, die beispielsweise seitlich der Ladeplattform am Fahrzeug über Bolzen drehbar gelagert sind. Drehbar angeordnete Rungen können von einer aufrechten Betriebsstellung in eine waagrechte Lage seitlich der Ladeplattform gebracht werden. In der Betriebsstellung sind die Rungen bei den bekannten Drehrungensystemen mittels eines Verriegelungsmechanismus, der unterhalb der Drehbolzen angeordnet ist, fixierbar. Zu den Vorteilen dieser bekannten Rungensysteme zählt, dass sie leicht handhabbar sind, einen flexiblen Einsatz der Fahrzeuge gewährleisten und ohne lose Teile auskommen. Eine Schwachstelle der bekannten Drehrungensysteme ist jedoch, dass die im Betrieb auftretenden Belastungen vom Drehbolzen aufgenommen werden müssen. Dies hat in der Praxis auch zur Folge, dass nach einer gewissen Betriebsdauer Schäden im Bereich der Bolzen unvermeidlich sind.

Ein Rungensystem der eingangs genannten Art ist beispielsweise aus der GB-A1-457992 bekannt. Die am Rahmenprofil eines Nutzfahrzeuges abklappbar gelagerten Rungen werden mittels einer Verriegelungsvorrichtung in ihrer Betriebsstellung gehalten. Diese Verriegelungsvorrichtung weist eine am Rahmenprofil angebrachte Konisch ausgebildete Tasche zur Aufnahme eines in der Runge linear verschiebbaren Keilstückes auf, welches ausschließlich durch einen seitlich an der Runge vorgesehenen Schlitz hindurch zu betätigen ist, welcher bei geschlossener Bordwand durch deren senkrechte Kantenfläche abgedeckt ist. Zum Ver- und Entrasten des Keilstückes ist es erforderlich, einen im Rungenschlitz gelagerten Winkelhebel zu betätigen.

Der Erfindung liegt die Aufgabe zu Grunde, ein Rungensystem mit drehbar gelagerten Rungen zur Verfügung zu stellen, welche den im Betrieb auftretenden Belastungen wesentlich besser standhalten als die bekannten Drehrungen und welche auf einfache Welse aus der Betriebsstellung In eine umgeklappte Ruhestellung bringbar sind.

Gelöst wird die gestellte Aufgabe erfindungsgemäß dadurch, dass auf der Runge ein als im Wesentlichen rechteckförmiger Profilteil ausgeführter Rungenschuh gleitbeweglich verschiebbar ist, welcher mit zumindest einem Führungsteil versehen ist, welcher in der Betriebsstellung oberhalb des Drehbolzens in ein fahrzeugfestes Einrastelement eingeschoben und fixiert ist, wobei der Rungenschuh in der Betriebsstellung die Runge allseitig abstützt und durch bloßes Verschieben entlang der Runge vom Einrastelement lösbar ist.

Bei einem erfindungsgemäß ausgeführten Rungensystem ist daher von besonderem Vorteil, dass in der Betriebsstellung eine allseitige Abstützung der Rungen oberhalb des Drehbolzens erfolgt. Die im Betrieb beim Beladen und Entladen, beim Transport und dergleichen auftretenden Kräfte werden daher nicht mehr auf den Drehbolzen übertragen, dieser wird deutlich entlastet. Die Fixierung der Rungen am Fahrzeug sowie die Anordnung der zur Fixierung vorgesehenen Rungenschuhe an den Rungen stellt sicher, dass keine losen Teile vorhanden sind.

Bei einer bevorzugten Ausführungsform der Erfindung ist der zumindest eine Führungsteil mit einer am fahrzeugfest angeordneten Einrastelement ausgebildeten Aufnahmenut in und außer Eingriff bringbar. Diese Ausführungsform gewährleistet eine einfache Betätigung des Rungenschuhs durch Verschieben.

Gemäß einem weiteren Merkmal der Erfindung weist der Rungenschuh eine die Runge fahrzeugaußenseitig abstützende Rungenstütze auf. Diese Maßnahme gestattet eine gute Verteilung der im beladenen Zustand auf die Rungen wirkenden Kräfte. Gemäß einem noch weiteren Merkmal der Erfindung ist der Rungenschuh ein auf die Runge steckbares oder schiebbares Profilteil. Der Rungenschuh bleibt daher während seiner Betätigung vorteilhafterweise mit der Runge verbunden. Dabei kann der Verschiebeweg des Rungenschuhes an der Runge durch einen Anschlag oder dergleichen begrenzt werden.

Die Rungen eines Rungensystems haben ein nicht unerhebliches Gewicht. Es ist daher von Vorteil, wenn bei einem erfindungsgemäß ausgeführten Rungensystem ein die Drehbewegung der Runge von der Ruhestellung in die Betriebsstellung unterstützender Rückstellmechanismus vorgesehen ist.

Bei einer einfachen und funktionellen Ausführungsform des Rückstellmechanismus weist dieser zumindest eine Feder auf, welche an der Runge oberhalb des Bolzens und an einem fahrzeugfesten Teil angreift.

Die Montage bzw. Anordnung des Rungensystems am Fahrzeug ist auf einfache Weise dann möglich, wenn die Rungen jeweils paarweise an einer Schwelle oder dergleichen angeordnet sind, welche mit dem Fahrzeug fest verbindbar ist. In diesem Fall ist es von Vorteil, wenn die Einrastelemente an den Seitenbereichen der Schwelle befestigt, insbesondere angeschweißt, sind.

lst keine Schwelle vorgesehen, so ist es auf einfache Weise möglich, die Einrastelemente direkt am Fahrzeug vorzusehen, insbesondere seitlich am Fahrzeug zu befestigen.

Mit einem erfindungsgemäßen Rungensystem versehene Fahrzeuge sind insbesondere Eisenbahnwagen oder Lastkraftwagen.

Weitere Merkmale, Vorteile und Einzelheiten der Erfindung werden nun anhand der Zeichnung, die ein Ausfuhrungsbeispiel darstellt, näher beschrieben Dabei zeigen
Fig. 1 eine Ansicht eines mit einem erfindungsgemäß ausgeführten Rungensystem versehenen Eisenbahnwagens,
Fig. 2 den Eisenbahnwagen aus Fig. 1 mit umgeklappten Rungen,
Fig. 3 ein an einer Ladeschwelle befestigtes baugleich ausgeführtes Rungenpaar,
Fig. 4 eine Schrägansicht der Ladeschwelle aus Fig. 3,
Fig. 5 eine Schrägansicht eines Bauteils des erfindungsgemäßen Rungensystems,
Fig. 6 ein Detail der Fig. 3 in vergrößertem Maßstab mit verriegeltem Rungenschuh,
Fig. 7 eine Detailansicht der Fixierung einer Runge an der Ladeschwelle,
Fig. 8 ein Detail der Fig. 3 in vergrößertem Maßstab mit entriegeltem Rungenschuh,
Fig. 9 eine Runge in ihrer umgeklappter Stellung,
Fig. 10 paarweise umgeklappte Rungen und
Fig. 11 und 12 weitere Ansichten zur Erläuterung der Funktionsweise eines Rückstellmechanismus.

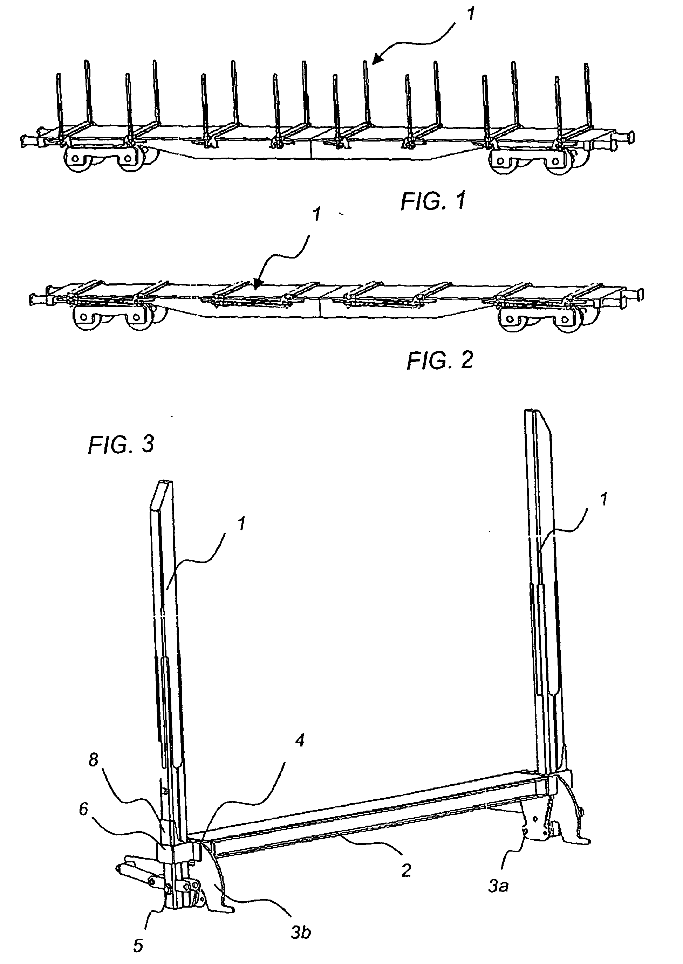

Fig. 1 und 2 zeigen Schrägansichten eines herkömmlichen, sechsachsigen Eisenbahnwagens, welcher mit einem erfindungsgemäß ausgeführten Rungensystem versehen ist, welches beim Transport von beispielsweise Rundoder Schnittholz als Transportsicherung dient. Fig. 1 zeigt die Rungen 1 in ihrer Betriebsstellung, bei umgeklappten Rungen 1, wie es Fig. 2 zeigt, können mit dem Eisenbahnwagen auch Container und andere Wechselbehälter transportiert werden.

Fig. 3 zeigt eine Ausführungsform der Erfindung mit paarweise an einer Ladeschwelle 2 befestigten Rungen 1. Sowohl die Rungen 1 also auch die Ladeschwelle 2 sind aus Stahl oder einem anderen geeigneten Werkstoff bestehende Formrohre oder sonstige Profilteile mit rechteckförmigem Querschnitt.

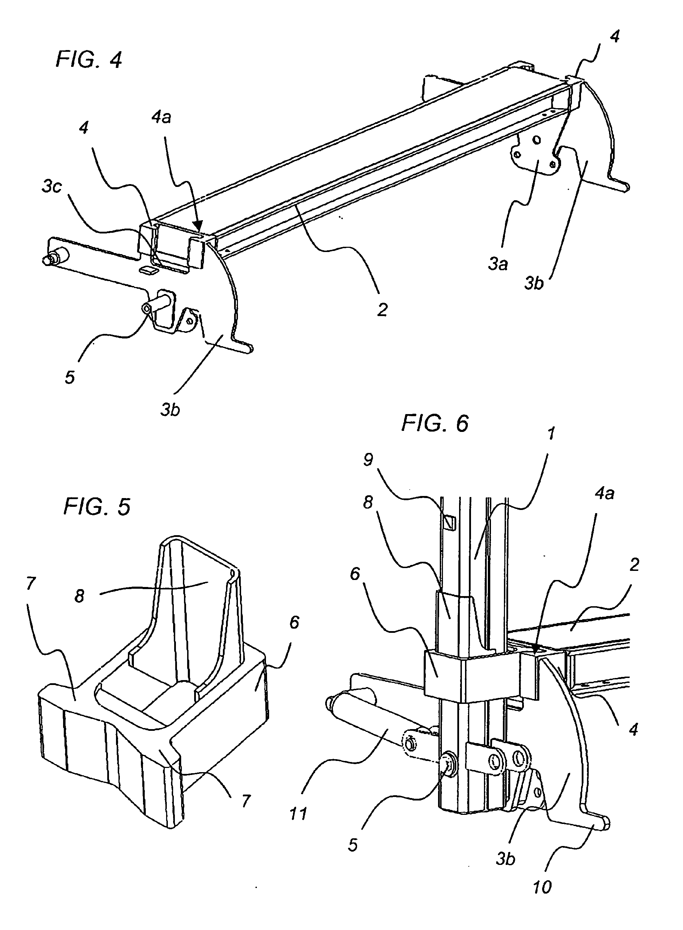

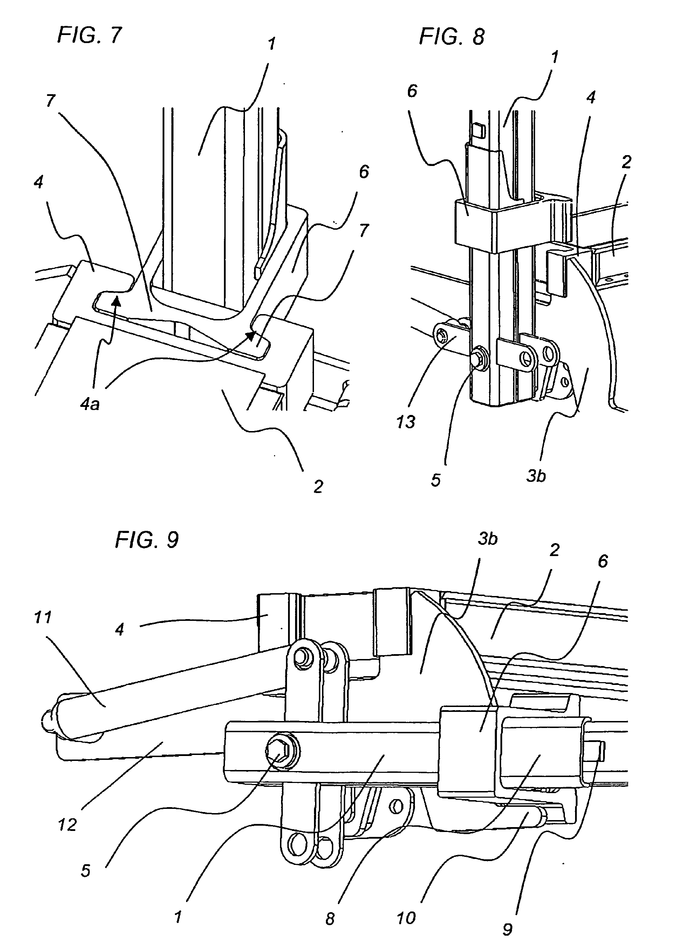

Die Ladeschwelle 2 wird am Fahrzeug befestigt, insbesondere angeschraubt. An den beiden Stirnseiten der Ladeschwelle 2 ist jeweils ein Einrastelement 4 angeschweißt, welches mit zwei weiteren Stahlblechteilen, einem Verbindungsteil 3a und einem Seitenteil 3b durch Schweißen oder ein anderes Verfahren fest verbunden ist. An diesen beiden Teilen 3a, 3b ist jeweils ein Bolzen 5 zur drehbaren Anordnung und Lagerung einer Runge 1 angeordnet. Das Einrastelement 4 ist, wie es insbesondere Fig. 4, 6 und 7 zeigen, mit in vertikaler Richtung verlaufenden Aufnahmenuten 4a versehen, die hinter L-förmig gebogenen Bereichen gebildet sind. Die Aufnahmenuten 4a bilden gemeinsam mit einem Stützteil 3c des Verbindungsteils 3a eine Rastaufnahme für einen Rungenschuh 6, welcher aus einem im Wesentlichen rechteckförmigen Profilteil aus Stahl oder einem anderem geeigneten Material besteht und auf der Runge 1 gleitbeweglich verschiebbar ist. Der Rungenschuh 6 ist außenseitig mit angeformten seitlich, abragenden Führungsteilen 7 versehen, mittels welcher er in die Aufnahmenuten 4a eingesetzt werden kann Wie es Fig. 5 in Verbindung mit Fig 6 und 7 zeigt, ist an der Innenseite des Rungeschuhes 6, den Fuhrungsteilen 7 gegenuberliegend, eine Rungenstütze 8 angeordnet, vorzugsweise angeschweißt, die im Wesentlichen U-förmig ausgeführt ist

Zur Befestigung der beiden Runge 1 an der Ladeschwelle 2 werden diese am Bolzen 5 drehbar festgeschraubt. Die Abstützung und Positionierung der Rungen 1 in der aufrechten Stellung, der Betriebsstellung, wird vom Rungenschuh 6 übernommen, welcher auf die Runge 1 aufgeschoben ist von oben her mittels seiner Führungsteile 7 in die Aufnahmenuten 4a des Einrastelementes 4 geschoben ist und sich am Stützteil 3c abstützt. ln der Betriebsstellung der Rungen 1 werden daher die auftretenden Kräfte auf die Rungenschuhe 6 und von diesen auf die Ladeschwelle 2 übertragen Auf den Bolzen 5 wirkt lediglich das Gewicht der Runge 1. Somit sind in der Betriebsstellung der Rungen 1 die Bolzen 5 weitgehend entlastet. Die an der Runge 1 außenseitig anliegende Rungenstütze 8 stützt im Betriebszustand die Runge 1 in Richtung Fahrzeugaußenseite ab Zum Umklappen einer Runge 1 wird ihr Rungenschuh 6 entlang der Runge 1 hochgeschoben und somit außer Eingriff mit dem Einrastelement 4 gebracht. Anschließend wird die Runge 1, wie es Fig 9 zeigt, durch ein Drehen um den Bolzen 5 in die umgeklapte Lage gebracht Ein an der Außenseite der Runge 1 befestigtes Anschlagteil 9 begrenzt den Verschiebeweg des Rungenschuhes 6 an Runge 1. Beim Erreichen der umgeklappten Stellung stützt sich die Runge 1 auf einem Auflageteil 10, der am Seitenteil 3b angeformt ist, ab.

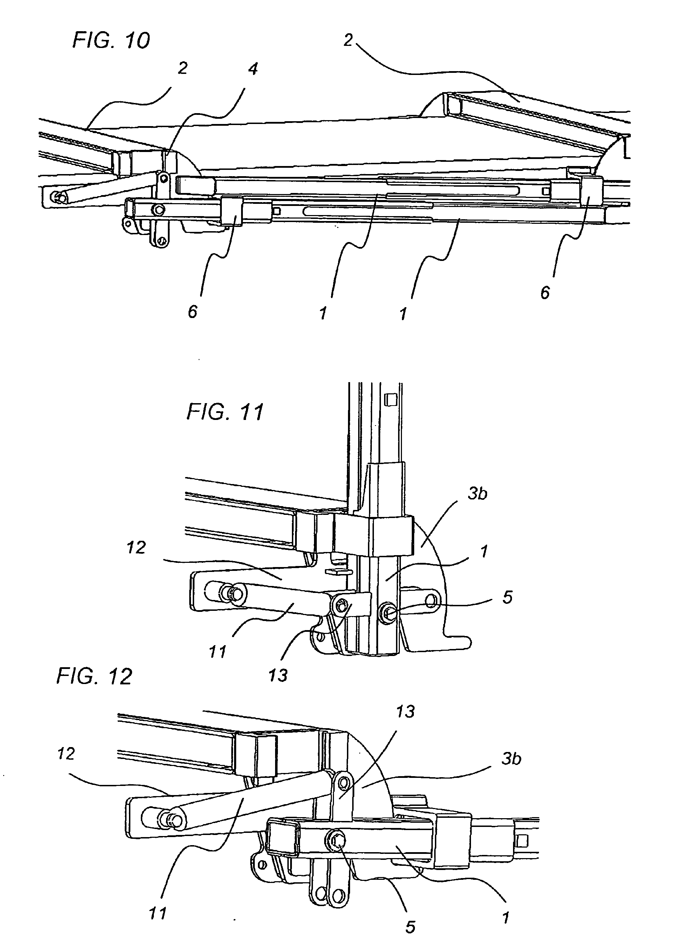

Wie ferner Fig. 10 zeigt, werden die Ladeschwellen 2 paarweise derart montiert, dass jeweils zwei Rungen 1 zueinander weisend umgeklappt und entsprechend abgestützt werden können. Die Rungen 1 befinden sich unterhalb der Ladekante des Fahrzeuges, das Ladegut ist frei zugänglich zum Be- und Entladen mittels entsprechender Geräte, beispielsweise Stapler.

Zum Wiederherstellen der aufrechten Lage der Rungen 1 werden diese um ihre Bolzen 5 hochgeklappt und es werden die Rungenschuhe 6 wieder in Eingriff mit den Aufnahmenuten 4a am Einrastelement 4 gebracht. Ist die aufrechte Lage der Runge 1 erreicht gleitet der Rungenschuh 6 zudem selbsttatig in die Aufnahmenuten 4a.

Wie die Zeichnungsfiguren, insbesondere Fig. 11 und 12, zeigen, kann ein Mechanismus vorgesehen werden, welcher die Rückstellung der Runge 1 von der umgeklappten in die aufrechte Lage unterstützt. Auf sehr einfache und zweckmäßige Weise erfolgt eine Unterstützung der Rückstellung mit einer Rückstellfeder 11. Die Rückstellfeder 11 ist mit ihrem einen Ende an einem Ausleger 12 des Seitenteils 3b befestigt, ihr zweites Ende ist an einem Mitnehmerteil 13, welcher im Fußbereich der Runge 1 oberhalb des Bolzens 5 befestigt ist, festgelegt. Wie Fig. 12 zeigt, ist in der aufrechten Lage der Runge 1 die Feder 11 zumindest weitgehend entspannt Nach dem Lösen der Fixierung der Runge 1 durch Anheben des Rungenschuhes 6 wird während der Drehbewegung der Runge 1 in die waagrechte Stellung die Feder 11 gespannt, da sich während des Drehens der Runge 1 der gegenseitige Abstand ihrer Angriffsstellen vergrößert. Gleichzeitig nimmt die Feder 11 eine leichte Schraglage gegenuber der geklappten Lage der Runge 1 ein übt derart ein das Anheben der Runge 1 unterstutzendes Moment aus.

Die Erfindung ist auf die dargestellten Ausführungsformen nicht eingeschränkt. So kann beispielsweise ein anderer Rückstellmechanismus vorgesehen werden. Die Rastaufnahme für den Rungenschuh kann an einem einteiligen Bauteil vorgesehen werden und es kann der Rungenschuh mit der Rungenstütze ebenfalls einteilig ausgeführt werden. Das Rungensystem erfordert nicht unbedingt eine Schwelle zum paarweisen Anordnen der Rungen, diese können mitsamt ihrer Einrasteinrichtung direkt am Fahrzeug angeordnet werden. Die Erfindung ist ferner auch bei Lastkraftwagen und anderen ein derartiges Transportsicherungssystem benötigenden Einrichtungen verwendbar.

## Patentansprüche

1. Rungensystem für Eisenbahnwagen oder Lastkraftwagen mit zumindest einer über einen Bolzen (5) drehbar gelagerten Runge (1), welche in eine aufrechte Betriebsstellung und eine geklappte Ruhestellung bringbar und in der Betriebsstellung fixierbar ist,
**dadurch gekennzeichnet,**
**dass** auf der Runge (1) ein als im Wesentlichen rechteckförmiger Profilteil ausgeführter Rungenschuh (6) gleitbeweglich verschiebbar ist, welcher mit zumindest einem Führungsteil (7) versehen ist, welcher in der Betriebsstellung oberhalb des Drehbolzens (5) in ein fahrzeugfestes Einrestelement (4) eingeschoben und fixiert ist, wobei der Rungenschuh (6) in der Betriebsstellung die Runge (1) allseitig abstützt und durch bloßes Verschieben entlang der Runge (1) vom Einrastelement (4) lösbar Ist.

2. Rungensystem nach Anspruch 1, **dadurch gekennzeichnet, dass** der eine Führungsteil (7) mit einer am fahrzeugfest angeordneten Einrastelement (4) ausgebildeten Aufnahmenut (4a) in und außer Eingriff bringbar ist.

3. Rungensystem nach Anspruch 1 oder 2, **dadurch gekennzeichnet, dass** der Rungenschuh (8) eine die Runge (1) fahrzeugaußenseitig abstützende Rungenstütze (8) aufweist.

4. Rungensystem nach einem der Ansprüche 1 bis 3, **dadurch gekennzeichnet, dass** an der Runge (1) ein den Verschiebeweg des Rungenschuhs (6) begrenzender Anschlag (9) vorgesehen ist.

5. Rungensystem nach einem der Ansprüche 1 bis 4, **dadurch gekennzeichnet, dass** ein die Drehbewegung der Runge (1) von der Ruhestellung in die Betriebsstellung unterstützender Rückstellmechanismus vorgesehen ist.

6. Rungensystem nach Anspruch 5, **dadurch gekennzeichnet, dass** der Rückstellmechanismus zumindest eine Feder (11) aufweist, welche einerends an der Runge (1) oberhalb des Bolzens (5) und anderenends an einem fahrzeugsfesten Teil (3a) angreift.

7. Rungensystem nach einem der Ansprüche 1 bis 6, **dadurch gekennzeichnet, dass** die Rungen (1) jeweils paarweise an einer Schwelle (2) oder dergleichen angeordnet sind, welche mit dem Fahrzeug fest verbindbar ist.

8. Rungensystem nach Anspruch 7, **dadurch gekennzeichnet, dass** die Einrastelemente (4) an den Stirnseiten der Schwelle (2) befestigt, insbesondere angeschweißt, sind.

9. Rungensystem nach einem der Ansprüche 1 bis 6, **dadurch gekennzeichnet, dass** die Einrastelemente der Rungen (1) seitlich am Fahrzeug befestigt sind.

10. Eisenbahnwagen, weicher mit einem Rungensystem gemäß einem oder mehreren der Ansprüche 1 bis 9 versehen ist.

11. Lastkraftwagen, welcher mit einem Rungensystem gemäß einem oder mehreren der Ansprüche 1 bis 9 versehen ist.

## Claims

1. A stanchion system for railway wagons or heavy goods vehicles comprising at least one stanchion (1) mounted rotatably by means of a bolt (5), which can be brought into an upright operating position and into a folded rest position and which can be fixed in the operating position,
**characterised in**
**that** a stanchion shoe (6) embodied as a substantially rectangular profile part is slidably displaceable on said stanchion (1), said shoe being provided with at least one guide part (7) which, in the operating position above the rotary bolt (5) is inserted into and fixed in an engaging element (4) fixed to the vehicle, wherein in the operating position the stanchion shoe (6) supports the stanchion (1) on all sides and is releasable from the engaging element (4) by merely displacing along the stanchion (1).

2. The stanchion system according to claim 1, **characterised in that** the one guide part (7) can be brought into and out of engagement with a receiving groove (4a) embodied as an engaging element (4) located fixedly on the vehicle.

3. The stanchion system according to claim 1 or 2, **characterised in that** the stanchion shoe (6) comprises a stanchion support (8) which supports the stanchion (1) on the outer side of the vehicle.

4. The stanchion system according to one of claims 1 to 3, **characterised in that** a stop (9) which limits the displacement path of the stanchion shoe (6) is provided on the stanchion (1).

5. The stanchion system according to one of claims 1 to 4, **characterised in that** there is provided a restoring mechanism which assists the rotary movement of the stanchion (1) from the rest position into the operating position.

6. The stanchion system according to claim 5, **characterised in that** the restoring mechanism comprises at least one spring (11) which at one end acts on the stanchion (1) above the bolt (5) and at the other end acts on a part (3a) fixed to the vehicle.

7. The stanchion system according to one of claims 1 to 6, **characterised in that** the stanchions (1) are each arranged in pairs on a cross member (2) or the like which can be firmly connected to the vehicle.

8. The stanchion system according to claim 7, **characterised in that** the engaging elements (4) are fastened to the front sides of the cross member (2), in particular are welded thereon.

9. The stanchion system according to one of claims 1 to 6, **characterised in that** the engaging elements of the stanchions (1) are fastened laterally on the vehicle.

10. A railway wagon provided with a stanchion system according to one or more of claims 1 to 9.

11. A heavy goods vehicle provided with a stanchion system according to one or more of claims 1 to 9.

## Revendications

1. Système de ranchers pour wagons ou poids lourds, avec au moins un rancher (1) monté de façon rotative par le biais d'un boulon (5), qui peut être mis dans une position verticale de fonctionnement et dans une position rabattue de repos et qui peut être fixé dans la position de fonctionnement,
**caractérisé en ce que**
un sabot de rancher (6), conçu comme un profilé essentiellement rectangulaire, peut être déplacé avec possibilité de translation sur le rancher (1), tout en étant pourvu d'au moins un élément de guidage (7), qui dans la position de fonctionnement est enfoncé et fixé au-dessus du boulon d'articulation (5) dans un élément d'enclenchement (4) fixe par rapport au véhicule, le sabot de rancher (6) formant un appui de tous les côtés pour le rancher (1) dans la position de fonctionnement, et pouvant être retiré de l'élément d'enclenchement (4) par un simple coulissement le long du rancher (1).

2. Système de ranchers selon la revendication 1, **caractérisé en ce que** l'au moins un élément de guidage (7) peut être engagé ou désengagé, au moyen d'une rainure d'admission (4a) formée sur l'élément d'enclenchement (4) fixe par rapport au véhicule.

3. Système de ranchers selon l'une des revendications 1 ou 2, **caractérisé en ce que** le sabot de rancher (6) comporte un support de rancher (8) soutenant le rancher (1) du côté extérieur du véhicule.

4. Système de ranchers selon l'une des revendications 1 à 3, **caractérisé en ce qu'**une butée limitant le trajet de déplacement du sabot de rancher (6) est prévue sur le rancher (1).

5. Système de ranchers selon l'une des revendications 1 à 4, **caractérisé en ce qu'**il est prévu un mécanisme de rappel permettant de soutenir le mouvement rotatif du rancher (1), de la position de repos à la position de fonctionnement.

6. Système de ranchers selon la revendication 5, **caractérisé en ce que** le mécanisme de rappel comporte au moins un ressort (11) agissant sur le rancher (1) à une extrémité, au-dessus du boulon (5), et sur un élément (3a) fixe par rapport au véhicule à l'autre extrémité.

7. Système de ranchers selon l'une des revendications 1 à 6, **caractérisé en ce que** les ranchers (1) sont disposés par paires sur une traverse (2) ou autre pouvant être reliée fixement au véhicule.

8. Système de ranchers selon la revendication 7, **caractérisé en ce que** les éléments d'enclenchement (4) sont fixés, en particulier soudés, sur les faces frontales de la traverse (2).

9. Système de ranchers selon l'une des revendications 1 à 8, **caractérisé en ce que** les éléments d'enclenchement du rancher (1) sont fixés latéralement sur le véhicule.

10. Wagon, équipé d'un système de ranchers selon l'une ou plusieurs des revendications 1 à 9.

11. Poids lourd, équipé d'un système de ranchers selon l'une ou plusieurs des revendications 1 à 9.
